Europäisches Patentamt

European Patent Office

Office européen des brevets

(19)

(11) Veröffentlichungsnummer: **0 085 951**
**B1**

(12) **EUROPÄISCHE PATENTSCHRIFT**

(45) Veröffentlichungstag der Patentschrift: **25.04.90**

(51) Int. Cl.⁵: **G 01 D 5/34,** G 01 D 5/249

(21) Anmeldenummer: **83101014.5**

(22) Anmeldetag: **03.02.83**

(54) **Verfahren und Vorrichtung zur Erfassung von Messgrössen.**

(30) Priorität: **09.02.82 CH 785/82**

(43) Veröffentlichungstag der Anmeldung:
**17.08.83 Patentblatt 83/33**

(45) Bekanntmachung des Hinweises auf die
Patenterteilung:
**25.04.90 Patentblatt 90/17**

(84) Benannte Vertragsstaaten:
**AT DE FR GB SE**

(56) Entgegenhaltungen:
**GB-A-2 067 282
GB-A-2 067 283
US-A-3 881 102
US-A-4 137 451
US-A-4 147 295
US-A-4 162 035**

**Die Akte enthält technische Angaben, die nach
dem Eingang der Anmeldung eingereicht
wurden und die nicht in dieser Patentschrift
enthalten sind.**

(73) Patentinhaber: **WILD LEITZ AG
CH-9435 Heerbrugg (CH)**

(72) Erfinder: **Waibel, Reinhard, Dr.
Büntstrasse 25
CH-9442 Berneck (CH)**

(74) Vertreter: **EGLI-EUROPEAN PATENT
ATTORNEYS
Horneggstrasse 4
CH-8008 Zürich (CH)**

Courier Press, Leamington Spa, England.

**Beschreibung**

Die Erfindung betrifft ein Verfahren sowie eine Vorrichtung zur Erfassung von Messgrössen in einem Messbereich mittels einer Projektion von Marken auf eine Mehrzahl von Fotoempfängern, die eine in einer Fläche enthaltene Fotoempfängeranordnung bilden, und einer Quantisierung der Intensitätsverteilung der Projektion auf der Fotoempfängeranordnung durch Vergleich je eines Intensitätssignals eines Fotoempfängers mit einer Reihe von schrittweise höher angesetzten Schwellwerten.

Bei Messungen von Längen oder Winkeln wird eine hohe Genauigkeit angestrebt. Die hierfür verwendeten bekannten Messgeräte, wie zum Beispiel geodätische Geräte sind so konstruiert, dass die Bedienungsperson die Messgrösse auf einer Skala, die aus optischen Marken, wie zum Beispiel Strichen, Spalten oder Ziffern, besteht oder an einer digitalen Anzeige abliest. Die sogenannte Aufbereitung der Messgrössen ist von Ablesemethode zu Ablesemethode unterschiedlich. Die Ablesung von Skalen ist subjektiv, hat jedoch den Vorteil eines geringen Apparateaufwands. Die Ablesung von digitalen Anzeigegeräten ist wesentlich genauer, hat jedoch den Nachteil des grossen Apparateaufwandes. Bekanntlich sollen geodätische Messgeräte, wie zum Beispiel Theodolite, einen kleinen, einfachen und leichtgewichtigen Apparateaufbau mit geringerem Leistungsverbrauch aufweisen. Ferner sollen diese Geräte wartungsfrei über Jahre hinaus den Betrieb mit der gleichen Präzision ausführen können. Diese Geräte werden im Gelände verwendet und müssen einen sehr rauhen Betrieb aushalten können.

Die bekannten digitalen Messsysteme, die zum Beispiel in der DE—OS 2 211 235 und US—PS 3 973 119 beschrieben sind, erfüllen keinesswegs die genannten Forderungen. So besitzen zum Beispiel statische Messsysteme a priori eine Genauigkeit, die bei geodätischen Geräten meist nicht ausreicht. Inkrementelle Messsysteme hingegen sind empfindlich gegen Unterbrüche der Versorgungsspannung, da der Winkel- oder Längenwert bei einer Veränderung der Messgrösse laufend, d.h. inkrementell erfasst und gespeichert werden muss. Hochgenaue dynamische Messsysteme sind schliesslich sehr aufwendig und besitzen verschleissempfindliche Antriebs- und Regelsysteme. Diese bekannten Messsysteme sind also sehr teuer, aufwendig, kompliziert und müssen während des Betriebs oft einer Wartung und Pflege durch teures Fachpersonal unterzogen werden oder sind ungenau und haben keine einfache Konstruktion.

Eine Auswerkung der in Marken enthaltenen Information mittels einer Quantisierung einer durch Projektion der Marken auf eine Fotoempfängeranordnung erhaltenen Intensitätsverteilung mit den Merkmalen des ersten Teils von Anspruch 1 ist in US—A—4 162 035 beschrieben.

Die Erfindung hat die Aufgabe, die oben beschriebenen Nachteile der bekannten Messsysteme, die deren Vorteile wieder aufheben, zu vermeiden und die Vorteile, wie Genauigkeit, einfacher und billiger Apparateaufbau, keine Wartung und Pflege, zu vereinen.

Diese Aufgabe wird durch das Im Patentanspruch 1 definierte Verfahren und durch die im Patentanspruch 6 definierte Vorrichtung gelöst. Vorteilhafte Weiterbildungen des Verfahrens ergeben sich aus den Ansprüchen 2 bis 5, vorteilhafte Ausbildungen der Vorrichtung ergeben sich aus den Ansprüchen 7 und 8.

Die Erfindung wird anhand der Zeichnungen näher erläutert. Es zeigen:

Fig. 1 einen Teil einer Skala mit codierten optischen Marken;

Fig. 2 eine graphische Darstellung der Intensitätsverteilung einer optischen Marke und der Fotoempfänger;

Fig. 3 eine Schaltungsanordnung zur Auswertung der durch die optische Marke repräsentierten Messgrösse;

Fig. 4 die Schaltungsanordnung der Fig. 3 mit einer Kompensationseinrichtung.

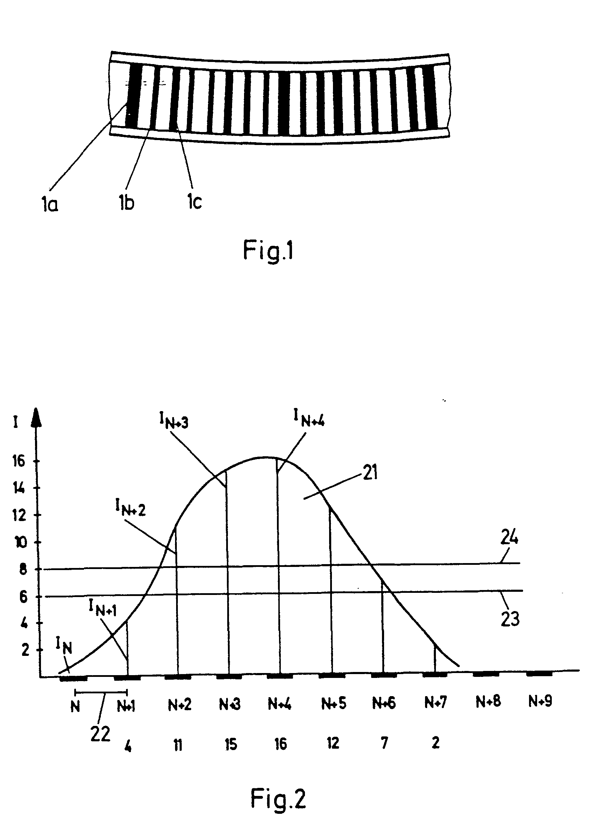

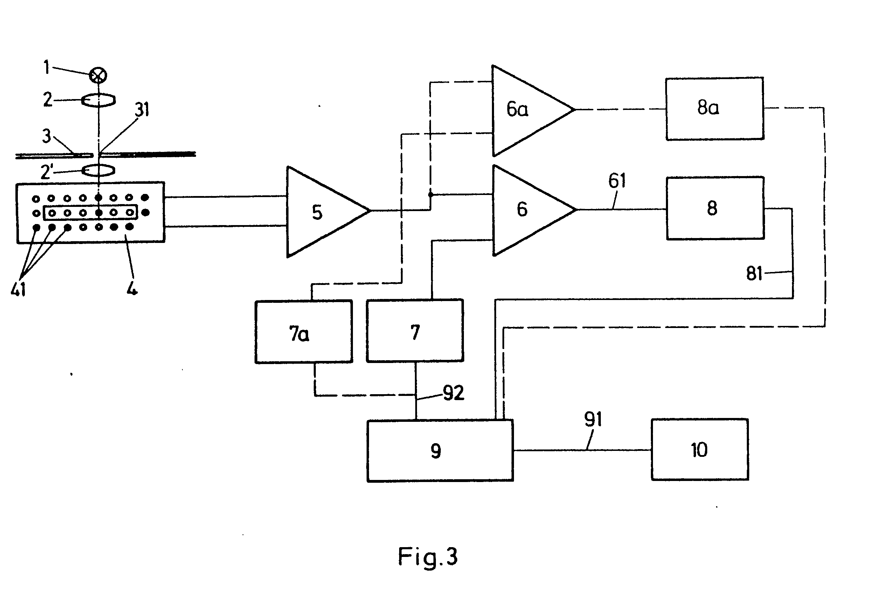

Als typisches Anwendungsbeispiel soll eine Winkelmesseinrichtung im folgenden beschrhieben werden. Die Messung erfolgt durch Erfassung der Lage eines codierten Messkreises, wie er zum Beispiel in den Figuren 1 und 3 angedeutet ist. Eine Skala 3 mit optischen Marken 31 kann beleuchtet ist. Eine Skala 3 mit optischen Marken 31 kann beleuchtet werden durch eine Lichtquelle 1 und Optiken 2 und/oder 2' können vorgesehen werden. Die optischen Marken können verschiedene Formn aufweisen, wie dies bereits als bekannt beschrieben wurde. Die optischen Marken 31 sind vorzugsweise transparent ausgebildet. Sie können jedoch auch undurchlässig gegen einen transparenten Hindergrund geformt sein. Zur Messung von einer Länge oder von einem Winkel sind die optischen Marken 31 so angeordnet, wie die Figur 1 zeigt. Zum Aufbau eines Winkelmessers sind diese optischen Marken radial ausgerichtet, während sie bei einem, Längenmesser parallel verlaufen. Die Figur 1 zeigt die Verwendung von drei verschiedenen Breiten dieser optischen Marken, die alle äquidistant angeordnet sind. Die breiten Marken, die mit la bezeichnet sind, identifizieren die Grenzen der Intervalle. Die schmalen, mit 1b bezeichneten Marken und die mit 1c bezeichneten mittelbreiten Marken dienen zur Codierung des entsprechenden Intervalls. Durch Zuordnung der Strichbreiten können somit unter Verwendung verschiedener binärer Codes maximal 128 Intervalle codiert werden.

Diese Codierung erlaubt es, den Mёßbereich in mehrere Intervalle aufzuteilen. Dies wird später im Zusammenhang mit der Figur 3 noch näher erklärt.

Im folgenden wird die Wirkungsweise des Ausführungsbeispiels der Figur 3 unter Zuhilfenahme der Figur 2 näher erklärt. Es sei angenommen, dass die Lichtquelle über die Optik 2 die auf der Skala 3 befindliche optische Marke 31 beleuchtet. Die Optik 2' soll in diesem Beispiel nicht vorhanden sein. Bei einem anderen Ausführungsbeispiel kann die Optik 2' ohne die obere Optik 2 benutzt werden. Es ist auch daran gedacht, dass keine der Optiken 2, 2' Verwendung finden muß. Die Fläche 4 enthält eine Vielzahl von Fotoempfängern 41, die entweder als Zeile oder gleichmässig in mehreren Zeilen auf dieser Fläche verteilt sind. Das Bild der beleuchteten optischen Marke 31 ergibt auf den angestrahlten Fotoempfängern die Intensitätsverteilung, wie sie in Fig. 2 dargestellt ist. Die Figur 2 zeigt nur eine Zeile der Fotoempfänger, die mit N bis N + 9 bezeichnet sind. Es werden jedoch nur die Fotoempfänger N bis N + 7 belichtet. Die Intensitätsverteilung ist durch den Abstand 22 der einzelnen Fotoempfänger und durch die analoge Grösse der Belichtung gegeben. Die Lage der optischen Marke 31 in bezug auf die einzelnen Fotoempfänger ist durch die Lage des Schwerpunktes der Intensitätsverteilung 21 gegeben. Die Ermittlung des Schwerpunktes kann sowohl analog als auch digital erfolgen. Beim Ausführungsbeispiel der Figuren 2 und 3 wird der Schwerpunkt digital ermittelt, was im folgenden näher beschrieben wird. In der Figur 2 sind auf der Ordinate die Werte für die Intensität I aufgetragen. Die einzelnen Fotoempfänger haben eine unterschiedliche Intensität, die mit $I_N$ bis $I_{N+3}$ beispielshalber bezeichnet sind. Diese Signale der einzelnen Fotodioden gelangen von der Flächenanordnung 4 auf das Anpassungsglied 5, das im folgenden Beispiel als Differenz-Verstärker ausgebildet ist. Hierzu wird noch erwähnt, dass die Signale entweder sequentiell über die beiden, in der Figur 3 gezeigten Leitungen auf das Anpassungsglied gelangen oder aber jedes Fotoelement 41 eine eigene Leitung zu dem Anpassungsglied 5 bestizt. Die einzelnen Signale gelangen zum Vergleicher 6, der über den Digital-Analogwandler 7 in einer bestimmten Reihenfolge Referenzsignale erhält, die mit den Intensitätssignalen der einzelnen Fotoempfänger verglichen werden. Dies ist in der Figur 2 schematisch dargestellt. Dort wird angenommen, dass das Referenzsignal 23 mit den Intensitätssignalen verglichen wird. Nur ein Teil der Fotoempfänger, nämlich diejenigen N + 2 bis N + 6 haben ein Intensitätssignal, das höher als dieser Schwellwert 23 ist. Beim vorliegenden Ausführungsbeispiel werden die Intensitätssignale aller Fotoempfänger mit dem Schwellwert 23 verglichen. Das Ergebnis gelangt über Leitung 61 auf die monostabile Kippschaltung 8. Nun wird von Digital-Analogwandler 7 das nächste Referenzsignal in die Vergleicherschaltung 6 gegeben. Dieses nächste Referenzsignal wird in der Vergleicherschaltung 6 als Schwellwert 24 verwendet. Dies ist in der Figur 2 ebenfalls eingezeichnet. Der Vergleich aller Fotoempfänger wird auf die gleiche Weise durchgeführt, wie bereits im Zusammenhang mit dem vorherigen Schwellwert 23 beschrieben wurde. Nun werden laufend weitere Schwellwerte gebildet und zwar solange, bis kein Signal mehr aus der Vergleicherschaltung 6 über die Leitung 61 auf den monostabilen Kippkreis 8 gelangt. In der Figur 3 ist ein weiterer Stromkreis gestrichelt dargestellt, der aus der Vergleicherschaltung 6a, dem Digital-Analogwandler 7a und dem monostabilen Kippkreis 8a besteht. Die Wirkungsweise dieser drei Bauelemente ist die gleiche wie bereits beschrieben wurde. Dieser weitere Stromkreis dient dazu, dass die Intensitätssignale der Fotoempfänger 41 zur gleichen Zeit mit zwei verschiedenen Schwellwerten verglichen werden können. Es wird noch darauf hingewiesen, dass es in der Figur 3 äquivalent wäre, noch weitere gleiche Schaltungen anzufügen, die es gestatten, die Intensitätssignale der Fotoempfänger gleichzeitig mit weiteren Schwellwerten zu vergleichen. Dies bringt eine wesentliche Verkürzung der Messzeit mit sich.

Die Ausgangssignale der Vergleicherschaltungen 6 bzw. 6a, usw. stellen die Quantisierungs-Information der Intensitätsverteilung der optischen Marke 31 dar. In dem monostabilen Kippkreis 8, 8a, usw. werden diese sehr kurzen Signale zeitlich verlängert und dem Mikroprozessor 9 über die Leitung 81 in der Weise zugeführt, dass die Intensitätsquantisierung für einen Schwellwert sequentiell übertragen wird. Im Mikroprozessor 9 wird der Schwerpunkt der gesamten quantisierten Intensitätsverteilung 21 mit Eingang der Quantisierungssignale für die anderen Schwellwerte errechnet. Der Schwerpunkt diese quantisierten Intensitätsverteilung 21 wird im Rechner 9 als Mass für die zu messende Grösse (z.B. Winkelmass oder Längenmass) erkannt. Es besteht auch die Möglichkeit, dass die Intensitätssignale der einzelnen Fotoelemente 41 mit verschiedenen Faktoren im Rechner 9 gewichtet werden. Dies kann zum Beispiel bedeuten, dass die quantisierte Intensitätsverteilung 21 der Figur 2 in der Mitte (d.h. bei den Fotoempfängern N + 3 und N + 4) grösser geworden ist.

Der Rechner stellt also die Messgrösse fest, die durch die optische Marke 31 repräsentiert wird. Da nun jedoch die optische Marke, die in der Figur 1 mit 1c bezeichnet ist, im vorliegenden Beispiel berechnet wurde und diese Marke in einem Intervall liegt, so muss noch die Codierung des betreffenden Intervalls vom Rechner 9 ebenfalls erarbeitet werden. Wie bereits im Zusammenhang mit der figur 1 gesagt, ist jedes Intervall durch optisch unterscheidbare Marken 1a, 1b, 1c codiert. Diese Marken sind in ihrer Breite unterschiedlich, haben jedoch äquidistante Abstände zueinander. Die unterschiedliche Breite der Marken gibt dem Rechner 9 die notwendige Information, im welchem Intervall die gerade berechnete Marke 1c liegt. Diese Information gibt der Rechner gemeinsam mit der Schwerpunkt-Information über die Leitung 91 auf das Anzeigegerät 10. In diesem Gerät wird die zu messende Grösse vollständig angegeben. Diese Grösse kann, wie bereits mehrmals schon erwähnt, entweder ein Längemass oder auch ein Winkelmass sein. Eine andere Möglichkeit der Codierung der einzelnen Intervalle kann durch optisch identische Marken mit variablem Abstand zueinander vorgesehen sein.

Der Rechner 9 gibt über die Leitung 92 die jeweiligen Referenzsignele zu dem Digital-Analogwandler 7 bzw. 7a und dies ist bereits schon beschrieben. Im folgenden wird jedoch darauf hingewiesen, dass zum automatischen Intensitätsabgleich der quantisierten Intensitätsverteilung die Referenzsignale aus dem Rechner 9 verändert werden können. Ein solcher Intensitätsabgleich ist notwendig, weil im Laufe der Betriebszeit entweder die Lichtquelle 1 oder die Empfindlichkeit der Fotoempfänger 41 auf der Fläche 4 in unkontrollierter Weise sich verändern können. Es sei nun angenommen, dass die Empfindlichkeit der Fotoempfänger durch Alterserscheinungen sich verringert. Dies bedeutet, dass die Intensitätsverteilung 21 nicht mehr die Schwellwerte arreicht, wie es früher der Fall gewesen ist. Der Rechner 9 hält dieses fest und verringert entweder die Schwellwerte, so dass sie von der quantisierten Intensitätsverteilung 21 wieder getriggert werden können oder die Lichtquelle 1 erhält einen höheren Beleuchtungsstrom, so dass trotz verminderter Empfindlichkeit der Fotoelemente 41 die bisherigen Schwellwerte wieder getriggert werden können. Es besteht auch die Möglichkeit, dass die bereits oben erwähnte Gewichtung der verschiedenen Intensitätssignale so durchgeführt wird, dass die quantisierte Intensitätsverteilung 21 an den gewünschten Stellen ansetzt. Abschliessend kann gesagt werden, dass infolge des beschriebenen Messprinzips der automatische Intensitätsabgleich immer vorhanden ist. Hierduch wird das Verhältnis der Schwellenwerte 23, 24, usw. zur maximalen Intensität der quantisierten Intensitätsverteilung 21 während der gesamten Betriebszeit optimiert.

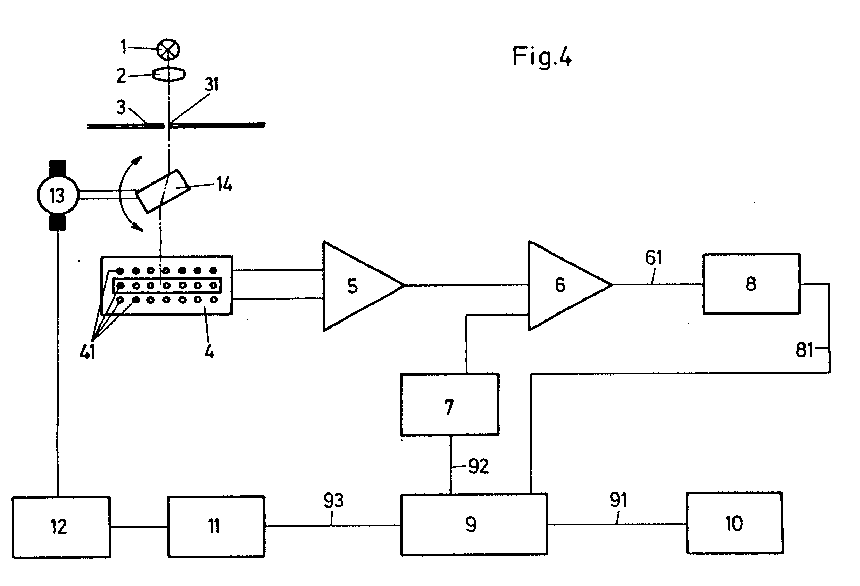

Die Figur 4 zeigt im wesentlichen die gleichen Bauteile wie das Ausführungsbeispiel der Figur 3, nur mit dem Unterschied, dass eine Kompensationseinrichtung zwischen der Skala 3 und der Fläche 4 der Fotoempfänger 41 angeordnet ist. Diese Kompensationseinrichtung, die aus einen Strahlverschiedbungselement 14 und einem Abtriebsmotor 13 besteht, wird vom Mikroprozessor 9 über den Digital-Analogwandler 11 und Verstärker 12 gesteuert. Zur Erklärung der Wirkungsweise der Kompensationseinrichtung sei angenommen, dass die Skala 3, auf der die optischen Marken 31 (Figur 4) oder 1a, 1b, 1c (Figur 1) angeordnet sind, entsprechend dem Messvorgang sich bewegt. Die den Lichtstrahl von der Quelle 1 kreuzenden optischen Marken 31 werden auf die Fotoempfänger 41 der Fläche 4 projiziert. Wie bereits im Zusammenhang mit den Figuren 2 und 3 beschrieben, ergibt sich eine in der nachgeordneten Auswerteschaltung 5, 6, 7, 8, 9 ermittelte quantisierte Intensitätsverteilung 21. Sollte sich nun herausstellen, dass der ermittelte Schwerpunkt dieser quantisierten Intensitätsverteilung 21 nicht genau in seiner Null-Lage sich befindet, gibt der Rechner 9 über Leitung 93 ein Ausgangssignal, das über den Digital-Analogwandler 11, Verstärker 12 den elektrischen Motor 13 so ansteuert, dass das Strahlverschiebungselement 14, das ein Prisma sein kann, wieder in die eine oder andere Pfeilrichtung dreht. Die Drehung wird so lange durchgeführt, bis der Schwerpunkt der quantisierten Intensitätsverteilung 21 sein Null-Lage wieder eingenommen hat. Durch diese automatische Kompensation wird sichergestellt, dass die optischen Messmarken, die für einen Messvorgang benutzt werden müssen, die gleiche Null-Lage auf der Fläche 4 aufweisen. Durch diese Massnahme ist die Messgenauigkeit erhöht.

**Patentansprüche**

1. Verfahren zur Erfassung Messgrössen in einem Messbereich mittels einer Projektion von Marken (1a, 1b, 1c, 31) auf eine Mehrzahl von Fotoempfängern (41), die eine in einer Fläche (4) enthaltene Fotoempfängeranordnung bilden, und einer Quantisierung der Intensitätsverteilung (21) der Projektion auf der Fotoempfängeranordnung $(N, \ldots, N + 9)$ durch Vergleich je eines $(I_N, \ldots, I_N + 9)$ Intensitätssignals eines Fotoempfängers mit einer Reihe von schrittweise höher angesetzten Schwellwerten (23, 24), dadurch gekennzeichnet, dass der Vergleich zunächst bei einem gegebenen Schwellwert sequentiell für alle Fotoempfänger nacheinander vorgenommen wird und danach für andere Schwellwerte wiederholt wird, und dass anschliessend für jede erfasste Market der Schwerpunkt der so quantisierten und als Funktion der räumlichen Fotoempfängeranordnung betrachteten Intensitätsverteilung bestimmt wird, wobei die Lage dieses Schwerpunktes relativ zur Fotoempfängeranordnung ein Mass für die zu messende Grösse ergibt.

2. Verfahren nach Anspruch 1, dadurch gekennzeichnet, dass der Messbereich in mehrere codierte Intervalle aufgeteilt wird, von denen jedes mehrere Marken umfasst, jedes Intervall kleiner ist als die die Fotoempfängeranordnung enthaltende Fläche, und die relative Lage des Intervalls zur Fläche ermittelt wird.

3. Verfahren nach Anspruch 2, dadurch gekennzeichnet, dass jedes Intervall durch abstandsgleiche, in der Breite unterscheidbare Marken codiert ist.

4. Verfahren nach Anspruch 2, dadurch gekennzeichnet, dass jedes Intervall durch in der Breite identische Marken mit variablen Abstand voneinander codiert ist.

5. Verfahren nach Anspruch 1, dadurch gekennzeichnet, dass durch Anpassung der Schwellwerte oder Änderung des Beleuchtungsstromes der Lichtquelle das Verhältnis des Höchstwerts der Intensitätsverteilung zum maximalen Schwellwertt im Hinblick auf die Quantisierung optimiert wird.

6. Vorrichtung zur Durchführung des Verfahrens nach Anspruch 1, mit einer Mehrzahl von Fotoempfängern (41), die auf einer Fläche (4) angeordnet sind und in Abhängigkeit von ihrer Beeinflussung durch eine aus der Projektion von Marken entstandene Intensitätsverteilung elektrische Signale erzeugen, gekennzeichnet durch einen Komparator (6) zum sequentiellen Vergleich der elektrischen Signale der Fotoempfänger (41) mit einer Folge von Schwellwerten, durch einen Rechner (9) zum Abspeichern der so ermittelten Quantisierung der Intensitätsverteilung und zur Berechnung des Schwerpunktes von in dieser Intensitätsverteilung erfassten Marken, und durch ein Anzeigegerät (10) zur Anzeige der im Rechner (9) ermittelten Messgrösse.

7. Vorrichtung nach Anspruch 6, dadurch gekennzeichnet, dass zwischen der Lichtquelle (1) und der Fläche (4) mit den Fotoempfängern (41) mindestens eine Optik (2, 2') vorgesehen ist.

8. Vorrichtung nach Anspruch 6, dadurch gekennzeichnet, dass zwischen der Skala (3) und der Fläche (4) mit den Fotoempfängern (41) eine Kompensationseinrichtung (14) zur Herstellung einer bestimmten Ausgangslage der Intensitätsverteilung vorgesehen ist.

## Revendications

1. Procéde de détermination de grandeurs à mesurer à l'intérieur d'un domaine de mesure au moyen de la projection de marques (1a, 1b, 1c, 31) sur une pluralité de récepteurs photoélectriques (41) qui forment une disposition de récepteurs photoélectriques sur une surface (4) et de la quantification de la répartition d'intensité (21) de la projection sur la disposition de récepteurs photoélectriques (N, . . . , N + 9) par comparaison chaque fois d'un signal d'intensité ($I_N$, . . . , $I_N$ + 9) d'un récepteur photoélectrique avec une série de valeurs de seuil (23, 24) incrémentées par étapes, caractérisé en ce que la comparaison est d'abord effectuée pour une valeur de seuil donnée, séquentiellement pour tous les récepteurs photoélectriques les uns après les autres, puis répétée pour d'autres valeurs de seuil, et qu'ensuite le barycentre de la répartition d'intensité ainsi quantifiée et considérée comme fonction de la disposition spatial des récepteurs photoélectriques et déterminé pour chaque marque considérée, la position de ce barycentre relativement à la disposition de récepteurs photoélectriques fournissant une mesure de la grandeur à mesurer.

2. Procédé selon la revendication 1, caractérisé en ce que l'on subdivisé le domaine de mesure en plusieurs intervalles codés dont chacun comprend plusieurs marques, que chaque intervalle est plus petit que la surface qui contient la disposition de récepteurs photoélectriques, et qu'on détermine la position relative de l'intervalle à la surface.

3. Procédé selon la revendication 2, caractérisé en ce que chaque intervalle est codé par des marques équidistantes différant en leur largeur.

4. Procédé selon la revendication 2, caractérisé en ce que chaque intervalle est codé par des marques de largeur identique présentant des distances variables des unes aux autres.

5. Procédé selon la revendication 1, caractérisé en ce que l'on optimise à l'égard de la quantification le rapport de la valeur maximum de la répartition d'intensité à la valeur maximum de seuil par adaptation des valeurs de seuil ou modification du courant d'illumination de la source lumineuse.

6. Dispositif pour la mise en oeuvre du procédé selon la revendication 1, comportant une pluralité de récepteurs photoélectriques (41) disposés sur une surface (4) et qui produisent des signaux électriques en fonction de l'influence qu'ils subissent de la part d'un répartition d'intensité provenant de la projection de marques, caractérisé par un comparateur (6) pour effectuer la comparaison séquentielle des signaux électriques des récepteurs photoélectriques (41) avec une série de valeurs de seuil, un ordinateur (9) pour la mémorisation de la quantification ainsi déterminée de la répartition d'intensité et le calcul du barycentre de marques considérées à l'interieur de cette répartition d'intensité, et un dispositif de visualisation (10) pour afficher la grandeur à mesurer déterminée par l'ordinateur (9).

7. Dispositif selon la revendication 6, caractérisé en ce qu'entre la source lumineuse (1) et la surface (4) comportant les récepteurs photoélectriques (41) on prévoit au moins un dispositif optique (2, 2').

8. Dispositif selon la revendication 6, caractérisé en ce qu'entre l'échelle (3) et la surface (4) comportant les récepteurs photoélectriques (41) on prévoit un dispositif de compensation (14) pour établir une situation initiale déterminée de la répartition d'intensité.

## Claims

1. A method for the determination of quantities to be measured within a measuring range by means of the projection of marks (1a, 1b, 1c, 31) onto a plurality of photoelectric receivers (41) forming an arrangement of photoelectric receivers on a surface (4) and of the quantizing of the intensity distribution (21) of the projection onto the arrangement of photoelectric receivers (N, . . ., N + 9) by comparison each time of an intensity signal ($I_N$, . . ., $I_N$ + 9) of a photoelectric receiver with a series of stepwise incremented threshold values (23, 24) characterized in that the comparison first is made for a given threshold value for all photoelectric receivers in sequence one after the other, then repeated for other threshold values and then the barycentre of the so quantized intensity distribution considered as a function of the spatial arrangement of the photoelectric receivers is determined for each considered mark, the position of this barycentre relative to the arrangement of photoelectric receivers being representative of a measure of the quantity to be measured.

2. A method according to claim 1, characterized in that the measuring range is subdivided into several coded intervals, each of which comprises several marks, each interval is smaller than the surface containing the arrangement of photoelectric receivers, and there is determined the relative position of the interval to the surface.

3. A method according to claim 2, characterized in that each interval is coded by equidistant marks which can be distinguished according to their width.

4. A method according to claim 2, characterized in that each interval is coded by marks identical in width and variably spaced from each other.

5. A method according to claim 1, characterized in that the ratio of the maximum value of the intensity distribution to the maximum threshold value is optimized in respect of the quantizing by adapting the threshold values or modifying the illumination current of the light source.

6. A device for performing the method of claim 1, comprising a plurality of photoelectric receivers (41) arranged at a surface (4) and which generate electrical signals in function of an influence from an intensity distribution from a projection of marks, characterized by a comparator (6) for comparing the electrical signals of the photoelectric receivers (41) in sequence with a series of threshold values, a computer (9) for storing the so determined quantizing of the intensity distribution and the computation of the barycentre of marks considered within this intensity distribution, and a display device (10) to display the quantity to be measured as determined by the computer (9).

7. A device according to claim 6, characterized in that between the light source (1) and the surface (4) containing the photoelectric receivers (41) there is provided at least one optical device (2, 2').

8. A device according to claim 6, characterized in that between the scale (3) and the surface (4) containing the photoelectric receivers (41) there is provided a compensation device (14) for establishing a determined initial situation of the intensity distribution.

Fig.1

Fig.2

Fig.3

EP 0 085 951 B1

Fig.4